# EUROPEAN PATENT SPECIFICATION

(11) **EP 4 530 867 B1**
(45) Date of publication and mention of the grant of the patent: **25.11.2026**
(21) Application number: 23199875.8
(22) Date of filing: 26.09.2023
(51) Int. Cl.: G06F 13/12, H04L 43/08, H04L 12/46, H04L 12/42, H04L 49/25, H04L 12/40, H04L 49/00, H04L 45/12, G06F 13/42, G06F 13/40, G06F 13/16, H04L 45/745, H04L 47/125

(54) **COMMUNICATION INTERFACE**
KOMMUNIKATIONSSCHNITTSTELLE
INTERFACE DE COMMUNICATION

(43) Date of publication of application: 02.04.2025
(73) Proprietor: NXP USA, Inc., Austin TX 78735 (US)
(72) Inventor: McDaid,, David, Redhill, RH1 1QZ (GB); Loeliger,, Jeffrey Thomas, Redhill, RH1 1QZ (GB)
(74) Representative: Schwarzweller, Thomas

(56) References cited:
- EP-A1- 1 881 413
- US-A1- 2018 227 229
- US-A1- 2021 320 886
- DEES RANDY ET AL: "Introduction to the Zipwire Interface; Inter-Processor Communication with SIPI/LFAST", 1 May 2015 (2015-05-01), XP055795154, Retrieved from the Internet <URL:https://www.nxp.com/docs/en/application-note/AN5134.pdf> [retrieved on 20210414]

## Description

### Field

The present disclosure relates to a communication interface and to an electronic control unit (ECU) comprising such a communication interface. The disclosure also relates to a method of operating said communication interface.

### Background

Control devices may include a plurality of Microcontroller units (MCUs). For example, an electronic control unit (ECU) , such as an Engine Control Unit for a vehicle may include many MCUs or "nodes" that may need to communicate with one another. The MCUs are typically connected via a communication interface which may utilise a communication interface such as low voltage differential signalling (LVDS). The number of MCUs in systems is ever increasing and as such, maintaining effective communication between these MCUs of the device can be challenging.

US 2021/0320886 A1 discloses methods, apparatus, systems, and articles of manufacture and disclosed for deterministic low latency packet forwarding for daisy chaining of network devices. An example apparatus includes fabric circuitry, first data interface circuitry and second data interface circuitry coupled to the fabric circuitry, the first data interface circuitry to, in response to a receipt of a data packet, identify the data packet to be transmitted to third data interface circuitry, a data forwarding buffer, and packet forwarding engine circuitry coupled to the data forwarding buffer and the fabric circuitry, the packet forwarding engine circuitry to store the packet data in the data forwarding buffer, and instruct the second data interface circuitry to transmit the data packet from the data forwarding buffer to the third data interface circuitry. US 2018/227229 A1 discloses methods and systems for detecting an application associated with a given IP flow and differentially forwarding packets based on determined application. EP1881413 A1 discloses a module having two transmitters and two receivers in a bit transmission layer, where the data transfer between the module and a central module takes place via a serial communication system of an automation system with point-to-point connections in a daisy-chain or a backplane-structure. Dees Randy *et al., "Introduction to the Zipwire Interface; Inter-Processor Communication with SIPI*/*LFAST"* discloses inter-processor communications with SIPI/LFAST on the MPC57xx and S32Vxxx families of devices.

### Summary

The present invention comprises a communication interface, an electronic control unit and a method of operating a communication interface as defined in the claims. Embodiments that do not fall within the scope of the claims are to be interpreted as examples useful for understanding the invention.

According to a first aspect of the present disclosure there is provided a communication interface for a first node comprising:
at least a first interface module and a second interface module wherein,
   the first interface module is configured to provide for point-to-point transmission of signalling to a second node and receipt of signalling from the second node via one or more first terminals of the first interface module, the first interface module further comprising one or more second terminals for coupling to a first processor to communicatively couple the first processor and the first interface module; and
   the second interface module is configured to provide for point-to-point transmission of signalling to a third node and receipt of signalling from the third node via one or more first terminals, the second interface module further comprising one or more second terminals for coupling to the first processor to communicatively couple the first processor and the second interface module; and
at least one hardware, interface-to-interface connection configured to communicatively couple the first interface module and the second interface module; and
a routing module configured to read a data frame derived from said signalling received via the respective one or more first terminals of one of the first interface module and the second interface module and, based on whether or not an identifier present in a routing field of the data frame matches one or more predetermined identifiers, provide for forwarding of at least part of the data frame to either the one or more second terminals for provision to the first processor or forward the data frame to the interface-to-interface connection for retransmission by the other of the first interface module and the second interface module.

The routing module comprises a first routing module comprising part of the first interface module and a second routing module comprising part of the second interface module, wherein
the first routing module is configured to read the data frame derived from said signalling received via the one or more first terminals of the first interface module and, based on whether or not the identifier present in the routing field of the data frame matches one or more predetermined identifiers, forward the data frame to either the one or more second terminals of the first interface module for provision to the first processor or forward the data frame to the interface-to-interface connection for retransmission by the second interface module to the third node; and
the second routing module is configured to read the data frame derived from said signalling received via the one or more first terminals of the second interface module and, based on whether or not the identifier present in the routing field of the data frame matches one or more predetermined identifiers, forward the data frame to either the one or more second terminals of the second interface module for provision to the first processor or forward the data frame to the interface-to-interface connection for retransmission by the first interface module to the second node.

In one or more embodiments the routing module comprises a register and an interface for programming the register with the one or more predetermined identifiers, wherein the predetermined identifiers allow the routing module to determine if information of the data frame is intended for one or more applications executed by the first processor.

In one or more embodiments the routing module is configured to:
receive a message from the first processor via the one or more second terminals and,
based on a predetermined rule, populate the routing field of the data frame generated to encapsulate the message and provide for transmission of the data frame as said signalling via the respective one or more first terminals.

In one or more embodiments the routing module is configured to:
receive a message from the first processor via the one or more second terminals and,
based on information provided by an application executed by the first processor, populate the routing field of the data frame with a specific identifier, the data frame generated to encapsulate the message, and
provide for transmission of the data frame as said signalling via the respective one or more first terminals.

In one or more embodiments the first processor is configured to execute one or more applications and the one or more applications are configured to send messages to the first interface module and the second interface module using an application-specific channel, wherein the routing module is configured to:
on receipt of one of said messages from the first processor, populate the routing field of the data frame generated to encapsulate the message based on the application-specific channel, and
provide for transmission of the data frame as said signalling via the respective one or more first terminals.

In one or more examples the routing field values are assigned statically or dynamically.

In one or more embodiments the routing module being configured to forward the data frame to the one or more second terminals for provision to the first processor includes one or more of the first interface module, the second interface module and the routing module being configured to remove the identifier present in the routing field.

In one or more embodiments the first interface module and the second interface module each include an Asynchronous Serial Transmission Interface block for providing said transmission and receipt of the signalling.

In one or more embodiments the Asynchronous Serial Transmission Interface block comprise a Low Voltage Differential Signalling Asynchronous Serial Transmission Interface, LFAST.

In one or more embodiments the first interface module and the second interface module each include a Serial Inter-Processor Interface, SIPI, block coupled with the Asynchronous Serial Transmission Interface block, wherein the SIPI block and Asynchronous Serial Transmission Interface block provide for said transmission and receipt of the signalling.

In one or more embodiments the first interface module and the second interface module each include a Serial Inter-Processor Interface, SIPI, block and an Asynchronous Serial Transmission Interface block, wherein the respective Asynchronous Serial Transmission Interface block includes said one or more first terminals to provide for said transmission and receipt of the signalling to the respective second node and third node and wherein the respective SIPI block includes said one or more second terminals for coupling to the first processor; and
wherein the first routing module is configured to provide data frames to and receive data frames from the respective Asynchronous Serial Transmission Interface block and is configured to couple to the first processor via the respective SIPI block; and
wherein the second routing module is configured to provide data frames to and receive data frames from the respective Asynchronous Serial Transmission Interface block and is configured to couple to the first processor via the respective SIPI block.

In one or more embodiments the routing module is configured to, based on forwarding of the data frame to the interface-to-interface connection for retransmission by the other of the first interface module and the second interface module, transmit a message for the first processor to inform it of said forwarding.

In one or more embodiments the identifier present in the routing field is added to the data frame in addition to an address field within the data frame, such as an address field present in a payload of the data frame.

According to a second aspect of the present disclosure there is provided an electronic control unit, ECU, for a vehicle, the ECU including a plurality of the nodes, each node including a communication interface according to the first aspect.

According to a third aspect of the present disclosure there is provided a method according to claim 14.

In one or more embodiments, the method includes, by the routing module:
receiving a message from the first processor via the one or more second terminals and,
based on a predetermined rule, populating the routing field of the data frame generated to encapsulate the message and provide for transmission of the data frame as said signalling via the respective one or more first terminals. In one or more embodiments, the method comprises, by the routing module:
receiving a message from the first processor via the one or more second terminals and,
based on information provided by an application executed by the first processor, populating the routing field of the data frame with a specific identifier, the data frame generated to encapsulate the message, and
providing for transmission of the data frame as said signalling via the respective one or more first terminals.

In one or more embodiments, the method comprises
executing, by the first processor, one or more applications and the one or more applications are configured to send messages to the first interface
module and the second interface module using an application-specific channel, wherein the method further comprises, the routing module:
   on receipt of one of said messages from the first processor, populating the routing field of the data frame generated to encapsulate the message based on the application-specific channel, and
   providing for transmission of the data frame as said signalling via the respective one or more first terminals.

In one or more embodiments, wherein the forwarding of the data frame to the one or more second terminals for provision to the first processor includes one or more of the first interface module, the second interface module and the routing module removing the identifier present in the routing field.

In one or more embodiments, the identifier present in the routing field is provided in the data frame in addition to an address field within the data frame.

The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which
Figure 1 shows an example embodiment of a communication interface;
Figure 2 shows representations of data frames generated and received by the communication interface according to an example embodiment;
Figure 3 shows an example configuration of a network of nodes connected via the communication interface of figure 1; and
Figure 4 outlines a method of operating the communication interface of figure 1.

### Detailed Description

One or more embodiments described herein relate to a communication interface. In particular, the embodiments relate to communication interfaces that utilise low voltage differential signalling (LVDS). However, it will be appreciated that the communication interface may use other types of signalling such as High Speed serial signalling (HSSL) within the context of this disclosure.

A system may include a number of nodes that require communication therebetween. Each node may comprise one or more MCUs. As the number of nodes increases, maintaining effective and efficient communication between these nodes/MCUs becomes increasingly more challenging. In particular, the latency of the overall system may increase due to the data traffic having to be routed through the network via a processor within each node/MCU.

Many currently available communication interfaces, particularly those implemented in Engine Control Units, have limited capability for routing of messages. It is common for such communication interfaces to pass messages to a processor, such as a central processing unit, CPU, serving (with reference to the open systems interconnection (OSI) model) the application layer for decision making on routing of the message to one or more other nodes. One or more of the embodiments described herein provide a way to facilitate improved forwarding of messages or data to reduce the load on the processor, such as the CPU serving the application layer.

One or more of the embodiments described herein may bypass involvement of the processor altogether in routing messages. This may reduce the overall latency of the communication provided by the communication interface in addition to reducing the load on the processor. In summary, this may be achieved by assessing a received data frame or message at lower levels of the OSI model when compared to the assessment that is typically carried out by the processor at the application layer.

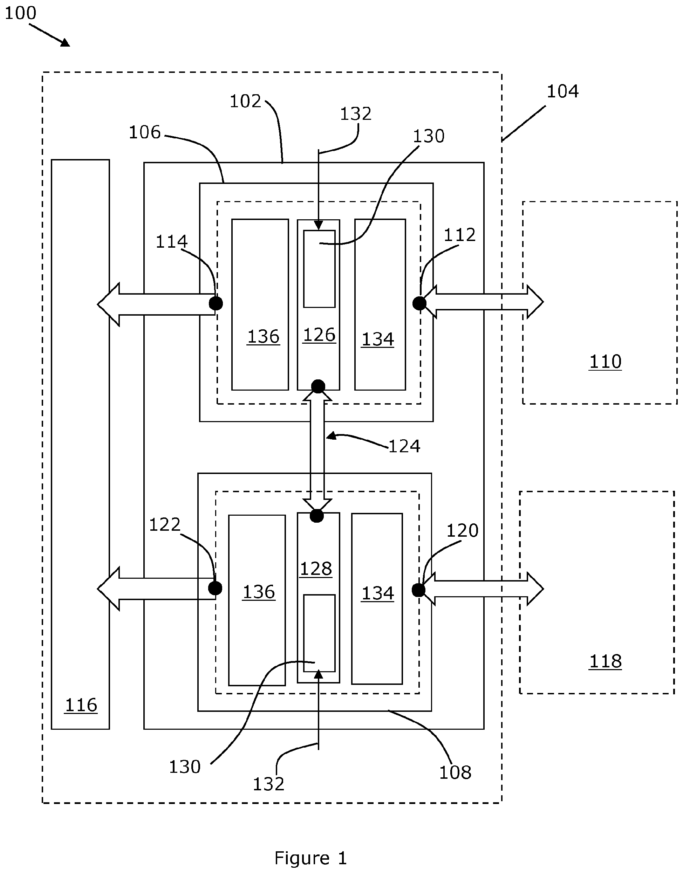

Figure 1 shows an example of a network 100 of which the communication interface 102 forms a part. It will be appreciated that the network 100 may have many nodes which are coupled together in a point-to-point arrangement for communication, rather than via a bus.. Each of the nodes may comprise a communication interface 102 to facilitate the communication of messages between the nodes in the network 100. The messages may be passed between the nodes, wherein those messages may be required to pass through other nodes before arriving at their intended "destination node". In one or more examples, each node may comprise an MCU. The node or MCU may include the communication interface 102 and a processor 116 or a plurality of processors.

It will be appreciated that the point-to-point signalling allows for information to be passed through the network in a sequential manner. Thus, signalling and the data frames contained within it are read and retransmitted, if required, from node to node until the message reaches the intended destination node before instructions contained therein can be executed.

The network 100 as shown in figure 1 comprises a first node 104, a second node 110 and a third node 118 which are communicatively coupled together in a point-to-point arrangement to allow for data to be transmitted between them. It will be appreciated that the number of nodes are not limited to three nodes and any number of nodes can be implement in the network 100. Three nodes have been shown in this example for simplicity. The structure of the second node 110 and the third node 118 in figure 1 may be nominally the same as the structure of the first node 104 and are not described separately. The structure of the first node 104 will be described below with reference to figure 1. It will be appreciated that different nodes may include additional or fewer components and do not all have to be identical.

The communication interface 102 comprises a first interface module 106 for handling communication with the second node 110. Thus, in this example, the first interface module 106 is configured to directly communicate with a respective interface module of the second node 110. The communication interface 102 also comprises a second interface module 108 for handling communication with the third node 118. Thus, in this example, the second interface module 108 is configured to directly communicate with a respective interface module of the third node 118. In the example shown in figure 1, the first interface module 106 of the first node 104 may be communicatively coupled to a second interface module of the second node 110 and the second interface module 108 of the first node 104 may be communicatively coupled to an interface module of the third node 110.

In some examples, the communication interface 102 may include as many interface modules as there are point-to-point connections with other nodes. It will also be appreciated that the first and second interface modules 106, 108 may be formed on the same integrated circuit (IC) or may be formed on separate IC's and be coupled together.

Figure 1 shows that the first node 104 is coupled to the second node 110. In the example of figure 1, the first interface module 106 has a first terminal 112 for communicating with the second node 110. The first interface module 106 is coupled to a first processor 116 via a second terminal 114. It will be appreciated that in the examples shown, the communication between the nodes may be provided using differential wires that convey LVDS. However, it will be appreciated that different types of signalling can also be implemented while using the appropriate types of connections. The first node 104 is also coupled to the third node 118. The second interface module 108 has a respective first terminal 120 for communicating with the third node 118. The second interface module 108 is also coupled to the first processor 116 via a respective second terminal 122. The communication interface 102 may be configured to provide for exchange of messages between the nodes 104, 110, 118 of the network 100 and/or the sharing of memory between the nodes 104, 110, 118.

The first interface module 106 and the second interface module 108 are coupled together by an interface-to-interface connection 124. The interface-to-interface connection 124 may provide a dedicated hardware connection to allow for communication directly between the first interface module 106 and the second interface module 108. It will be appreciated that in some examples the interface-to-interface connection 124 may instead be implemented using pre-existing connections and additional software within each of the first interface module 106 and the second interface module 108.

Accordingly, a message received by the first interface module 106 from the second node 110 may be forwarded directly to the second interface module 108 for onward transmission to the third node 118. In some but perhaps not all examples, a message received by the second interface module 108 from the third node 118 may be forwarded directly to the first interface module 106 for onward transmission to the second node 110. Thus, this allows for data to be transmitted from the second node 110 to the third node 118 (or vice-versa in some examples) via the first node 104 without loading the processor 116 of the first node 104.

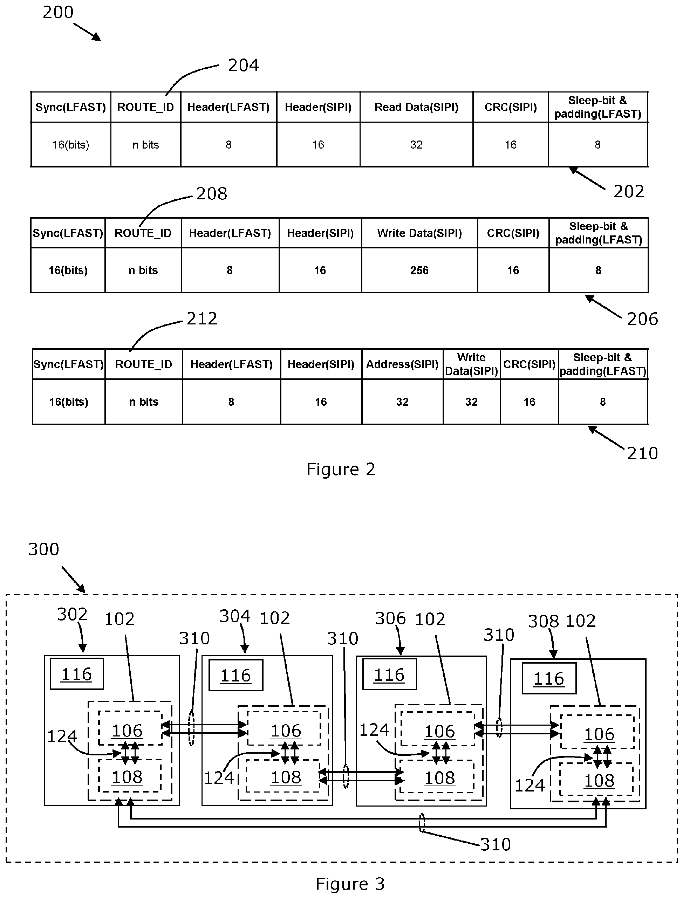

The use of the interface-to-interface connection 124 may be controlled by a routing module 126, 128. The routing module, in the present example, is embodied as a first routing module 126 in the first interface module 106 and a second routing module 128 in the second interface module 108. However, in other examples, the routing module may be centralised, or distributed in a different way, for control of the use of the interface-to-interface connection 124. For example, in one or more examples, the routing module 126, 128 may be implemented as a single module 126, 128 that is coupled to both the first interface module 106 and the second interface module 108. Having a routing module in both the first interface module 106 and the second interface module 108 may allow for data frames (which will be described later in relation to figure 2) to be retransmitted in either direction (i.e. from the second node to the third node or from the third node to the second node). It will be appreciated that in one or more examples the routing module may be implemented in only one of the first interface module 106 or the second interface module 108 to facilitate use of the interface-to-interface connection 124 in a specific direction. In one or more examples, the routing module 126, 128 may be advantageous as it provides for forwarding of data frames 200 back out of the first node 104 without placing load on the first processor 116.

In prior implementations, the first processor 116 would be tasked with determining if the data present in the data frame 200 was intended for the applications that the first processor is executing, thereby adding to its load. In one or more examples of the present embodiment, the routing module 126, 128 may be able to make that decision without forwarding the information present in the data frame 200 to the first processor 116 at all, thereby reducing the load on the first processor 116.

In some examples, the routing module 126 may inform the processor 116 when it has routed a message via the interface-to-interface connection 124. This may be achieved by setting a flag that is readable by the processor 116. This can allow for specific safety measures to be put into place. For instance, if a message bypasses an intended node due to the data frame being forwarded due to, for example, an external attack, the node in which the interface module 102 is implemented will become aware of the forwarding of the data frame based on the status flag and the system may be configured to take remedial action. This can allow for an added layer of security in the network 100. The above example may be implemented by the routing module 126, 128 being configured to, based on forwarding of the data frame 202, 206, 210 to the interface-to-interface connection 124 for retransmission by the other of the first interface module 106 and the second interface module 108, transmit a message to the first processor 116 to inform it of said forwarding.

In some examples, the first interface module 106 and the second interface module 108 each may include an Asynchronous Serial Transmission Interface block 134 for providing said transmission and receipt of the point-to-point signalling. In some examples the Asynchronous Serial Transmission Interface block may comprise a Low Voltage Differential Signalling Asynchronous Serial Transmission Interface 134 module, such as LFAST.

In some examples the first interface module 106 and the second interface module 108 may each include a serial inter processor interface (SIPI) block 136 coupled with the Asynchronous Serial Transmission Interface block 134, wherein the SIPI block 136 and Asynchronous Serial Transmission Interface block 134 provide for said transmission and receipt of the signalling.

In one or more examples, the first interface module 106 and the second interface module 108 may be embodied as a first Zipwire module and a second Zipwire module respectively. Zipwire is one example of an existing implementation of a LVDS interface which can be used to implement the embodiments described. Zipwire is an Inter-Processor Communication interface utilising a Serial Inter-Processor Interface (SIPI) over an LVDS Fast Asynchronous Serial Transmission Interface (LFAST) by NXP Semiconductors. However, it will be appreciated that the embodiments can be implemented using other types of differential and non-differential signalling. It will be appreciated that in other examples, the first interface module 106 and the second interface module 108 may be implemented using HSSL or another serial communication specification such as the improved inter integrated circuit (I3C) specification.

In the example shown in figure 1, the respective Asynchronous Serial Transmission Interface block 134 may include said one or more first terminals 112, 120 to provide for said transmission and receipt of the signalling to the respective second node 110 and the respective third node 118. The respective SIPI block 136 may include the one or more second terminals 114, 122 for coupling to the first processor 116. The first routing module 126 may be configured to provide data frames 202, 206, 210 to and receive data frames 202, 206, 210 from the respective Asynchronous Serial Transmission Interface block 134 and may be configured to couple to the first processor 116 via the respective SIPI block 136. The second routing module 128 may be configured to provide data frames 202, 206, 210 to and receive data frames 202, 206, 210 from the respective Asynchronous Serial Transmission Interface block 134 and may be configured to couple to the first processor 116 via the respective SIPI block 136.

In one or more known examples of point-to-point networks 100, the decision to transmit data from one node to the next node in a network is done by the processor, that is comparable to processor 116, at the application layer level. This has the drawback that several processing steps must be carried out on the received signalling to move it between the modules operating at the lower layers of the OSI model to the upper layers and back again prior to moving it onto the next node. This additional processing introduces latency and also additional load on the first processor 116. One or more embodiments of the communication interface 102 avoid the unnecessary processing steps and allow the data to be redirected from a much lower layer with reference to the OSI model. In one or more examples, this has the advantage of reducing latency and also improving overall efficiency of the network 100 by avoiding unnecessary processing steps.

Figure 2 shows a series of example data frames 202, 206, 210. The data frames 202, 206, 210 may be exchanged by the first interface module 106 and the second interface module 108 and the respective interface modules at the second node and the third node.

The data frames 200 of the present examples include the addition of a routing field, designated "ROUTE_ID" field 204, 208, 212. In some examples the ROUTE_ID 204, 208, 212 may provide an identifier that can be used by the routing module 126 of the first interface module 106 to determine whether the data frame should be forwarded to the first processor 116 or whether it should be forwarded directly to the second interface module 108 for onward transmission to the third node 118. In one or more other examples the ROUTE_ID field may comprise a unique address for each node in the network 100 or may identify a particular application that may be implemented by the first processor 116 of any given node 104, 110, 118. This may allow the routing module 126, 128 to act such that the data frames intended for the first node 104 or a particular application being executed by the processor 116 of the first node 104 are transmitted to the first processor 116. If the routing module does not recognize the identifier, the data frame 202, 206, 210 is forwarded to the other interface module 106, 108 for transmission to the adjacent node which is coupled to the other interface module.

It will be appreciated that the addition of the route ID field 204, 208, 212 to the data frames 200 will affect the data throughput. However, as will be shown below, the impact of using a 3-bit ROUTE_ID (which can provide 8 unique identifiers) has a negligible impact on the performance of the network 100. It will be appreciated that the ROUTE_ID field may be implemented using any number of bits and will depend on how many unique identifiers are necessary to distinguish the number of nodes in the network or the number of MCUs in the network or may be determined by a combination of the number of MCUs and the number of applications that can be run on each MCU.

As an example, the effect of the 3-bit ROUTE_ID on the performance of the read32, write32 and streaming write data rates are considered below for nominal data rates of 420Mbps and 320Mbps. These theoretical throughput rates are reduced by the inclusion of the ROUTE_ID field. Each data frame 200 has the following common fields: a "Sync (LFAST)" field which is formed of 16 bits. The "ROUTE_ID" field, which in this example is formed of 3 bits. The "LFAST header" which is formed of 8 bits. The "SIPI header", which is formed of 16 bits. A "CRC(SIPI)" comprising the SIPI cyclic redundancy check field, which is formed of 16 bits. Finally, a "Sleep-bit and padding" field is included which is formed of 8 bits. For a Read32 data frame 202, in addition to the common fields outlined above, there is also a "Read Data (SIPI)" field between the SIPI header and the CRC field. The "Read Data (SIPI)" field is formed of 32 bits. For a streaming write data frame 206, in addition to the common fields outlined above, there is also a "Write Data (SIPI)" field between the SIPI header and the CRC field. The "Write Data (SIPI)" field is formed of 256 bits. For a Write32 data frame 210, in addition to the common fields outlined above, there are also the "Address (SIPI)" and a "Write Data (SIPI)" fields between the SIPI header and the CRC(SIPI) field. The "Address (SIPI)" is formed of 32 bits and the "Write Data (SIPI)" field is also formed of 32 bits.

It will be appreciated that the lengths of the various fields in the data frame are shown for a particular example and different communication protocols may require different lengths or fewer or additional fields in the data frame 200.

The table below summarises the effect of the 3-bit ROUTE_ID on the achievable data rates.

| **Nominal data rate** | **320Mbps** | | **420Mbps** | |
|---|---|---|---|---|
| | Without ROUTE_ID | With ROUTE_ID | Without ROUTE_ID | With ROUTE_ID |
| **Read 32** | 13.33MB/s | 12.93MB/s | 17.50MB/s | 16.97Mb/s |
| **Write 32** | 10.00MB/s | 9.77MB/s | 13.13MB/s | 12.82MB/s |
| **Streaming write** | 32.00MB/s | 31.70MB/s | 42.00MB/s | 41.61MB/s |

As can be seen in the table above, the inclusion of the ROUTE_ID field 204, 208, 212 has a negligible effect on the performance of the data rates.

In the example of figure 2, the ROUTE_ID field is provided directly after the sync field, therefore the ROUTE_ID is the first portion of information (after sync) that is received by the communication interface 102. It will be appreciated however, that the ROUTE_ID field may be positioned at a different location in the modified data frame 200, such as between the LFAST header and the SIPI header.

The routing module 126, 128 may form part of the LFAST block 134 or the SIPI block 136 within the communication interface 102 as shown in figure 1. In one or more examples the retransmission of the data frame 200 may be performed by the dedicated routing module 126, 128 and the routing module may be positioned such that the data frame 200 first passes through the routing module 126, 128. In some other examples, the routing module may be positioned between the LFAST block 134 and the SIPI block 136. In this case, the position of the ROUTE_ID field may be after the LFAST header. In yet another example, the routing module 126, 128 may be positioned after both the LFAST block 134 and SIPI block 136. In this case, the position of the ROUTE_ID field may need to be after both the LFAST header and the SIPI header.

It will be appreciated that the position of the ROUTE_ID field will therefore depend on which element of the interface module 102 performs the assessment of the data frame 200 for subsequent retransmission to the adjacent nodes. The position of the ROUTE_ID field in the data frame 200 also depends on the relative location of the routing module 126, 128 within the interface module that makes the assessment of the data frame 200.

In some examples, as shown in figure 1, the first routing module 126 may be configured to read the data frame 202, 206, 210 derived from said signalling received via the one or more first terminals 112 of the first interface module 106. If the identifier present in the ROUTE_ID field 204 of the data frame 200 matches one or more predetermined identifiers, the communication interface 102 may be configured to forward the data frame 200 to the one or more second terminals 114 of the first interface module 106 for provision to the first processor 116. If the identifier present in the ROUTE_ID field 204 of the data frame 200 does not match one or more predetermined identifiers, the communication interface 102 may be configured to forward the data frame 200 to the interface-to-interface connection 124 for retransmission by the second interface module 108 to the third node 118.

In some examples the second routing module 128 may be configured to read the data frame 200 derived from said signalling received via the one or more first terminals 120 of the second interface module 108. If the identifier present in the ROUTE_ID field 204 of the data frame 200 matches one or more predetermined identifiers, the communication interface may be configured to forward the data frame 200 to the one or more second terminals 122 of the second interface module 108 for provision to the first processor 116.

In some examples, the routing module 126, 128 being configured to forward the data frame 202, 206, 210 to the one or more second terminals 122 for provision to the first processor 116 may include one or more of the first interface module 106, the second interface module 108 and the routing module 126, 128 being configured to remove the predetermined identifier present in the ROUTE_ID field 204, 208, 212 of the modified data frame. Accordingly, in such an example, the processor 116 does not receive unexpected information and the first interface module 106 and the second interface module 108, using the ROUTE_ID field handle the forwarding process.

If the identifier present in the ROUTE_ID field 204 of the data frame 200 does not match one or more predetermined identifiers, the communication interface 102 is configured to forward the data frame 200 to the interface-to-interface connection 124 for retransmission by the first interface module 106 to the second node 110.

The predetermined identifiers enable the communication interface 102 to determine whether the data frame is intended for the first node 104 (i.e. to determine whether the node is the intended "destination node"). If the identifier does not match the predetermined identifier, the communication interface 102 forwards the data frame to either the second node 110 or the third node 118 for subsequent processing/assessment.

Figure 1 also shows that in one or more examples, the routing module 126, 128 may comprise a register 130 and an interface 132 for programming the register 130 with the one or more predetermined identifiers. In one or more examples, the register 130 may be programmed at a point of manufacture or during initial boot up procedure.

The first processor 116 may be configured to execute multiple applications. A feature of SIPI, and perhaps other interfaces, is that each application is assigned to one or more specific "channels". In such an example the first processor 116 may be configured to execute the one or more applications and the one or more applications may be configured to send messages to the first interface module 106 and the second interface module 108 using an application-specific channel. The routing module 126, 128 may be configured to, on receipt of one of said messages from the first processor 116, populate the ROUTE_ID field 204, 208, 212 of the data frame 202, 206, 210 with an application-specific ROUTE_ID (i.e. an application-specific identifier). Once the application-specific ROUTE_ID is assigned and added to the ROUTE_ID field 204, 208, 212, the data frame 202, 206, 210 can be generated to encapsulate the message based on the application-specific channel and provide for transmission of the data frame 202, 206, 210 as said signalling via the respective one or more first terminals 112, 120. In one or more examples the ROUTE_ID field 204, 208, 212 values may be assigned with reference to a register by the first processor. Each application-specific channel may have its own ROUTE_ID. In one or more examples these application-specific channels may be statically or dynamically assigned by the first processor 116. In one or more examples the ROUTE_ID field 204, 208, 212 may be predefined in a look-up-table (LUT) and the routing module 126, 128, in response to receiving a message from the first processor 116, may be configured to assign an appropriate ROUTE_ID based on the LUT and an application from which the message was received. In one or more examples a user may program the LUT as per their application needs. i.e. application x will use channel y which will require Route _ID z, where x, y, and z.

In some examples each of the one or more channels may be identified by a channel number. The routing module 126, 128 may be configured to allocate a different predetermined identifier to each respective channel used by the applications run on the first processor 116.

In some examples the routing module 126, 128 may automatically add the predetermined identifier for each channel, whereas in other examples the predetermined identifier may be selected from a list of available identifiers or be manually added to the register.

In some examples the data frame 202, 206, 210 may be assessed by a subsequent node and the values of the ROUTE_ID field 204, 208, 212 of the data frame 200 may be compared to the predetermined identifier(s) stored in the register 130 of the routing module 126, 128 of the subsequent node. If the ROUTE_ID field 204 in the data frame 200 does not match the identifier allocated to the first processor (or to an application being run on the first processor 116), the data frame 200 is automatically forwarded to the next node in the network 100. The above process continues until the data frame arrives to the intended "destination node", at which point the routing module of the node, instead of forwarding the data frame to the next node in the network, forwards the data frame to the processor of the node.

In some other examples the ROUTE_ID field 204 may be populated by a predetermined rule that is implemented by a specific block within the first interface module 106 or the second interface module 108. In such an example the routing module 126, 128 may be configured to receive a message from the first processor 116 via the one or more second terminals 114, 122. Based on the predetermined rule, the communication interface 102 may be configured to populate the ROUTE_ID field 204, 208, 212 of the data frame 202, 206, 210 with the specific identifier. Once the specific identifier is added to the ROUTE_ID field 204, 208, the data frame 202, 206, 210 can be generated to encapsulate the message and provide for transmission of the data frame 202, 206, 210 as said signalling via the respective one or more first terminals 112, 120.

Figure 3 shows a schematic of a network 300 of nodes 302, 304, 306, 308, such as that found within an ECU for a vehicle or in another networked system. Each node in the example of figure 3 includes a communication interface 102 to provide for the forwarding of the data frames as described previously. Figure 3 shows that each node in the network is coupled to one other node on either side to form the network of nodes 300. In the example of figure 3, the signalling provided between nodes is provided using a LVDS scheme 310. Figure 3 also indicates the interface to interface connections 124 between the first interface module 106 and the second interface module 108 of each node.

In one or more examples the communication interface 102 may allow many MCUs or nodes to share memory of the nodes using only two hardware interfaces per node 102, 110, 118. In a typical point-to-point network, a dedicated hardware interface would be necessary between every pair of nodes in order to share memory across the whole network 100. Therefore in some examples, the communication interface 102 allows for reduced manufacturing complexities and allows for simplified network layouts to be utilised while improving the overall access to system resources.

The operation of a specific, non-limiting example of the implementation of the communication interface as shown in figure 3 is described below. In figure 3 the network is set up as a daisy chain, however other network topologies can also be used such as a star network. In the daisy chain arrangement of figure 3, the first node 302 may be considered to be the master node and is connected to the second node 304. However in the example, the first node is required to read the memory or access another resource of the fourth node 308. During the process, the data frame 200 is received by the second node 304 from the first node 302. The second node 302 reads the data frame 200 and, in particular, the ROUTE_ID field 204 of the data frame. The second node determines that the ROUTE_ID in the ROUTE_ID field of the data frame 200 does not match a predetermined identifier in the register 130 of the second node 304. The data frame is therefore automatically forwarded to the interface to interface connection 124 of the first interface module 106 of the second node 304 and is subsequently retransmitted to the third node 306 by the second interface module 108 of the second node 304. This process is repeated by the third node 306 and the data frame is retransmitted to the fourth node 308 by the second interface module 108 of the third node 306. When the data frame is received by the fourth node 308, the fourth node reads the data frame 200 and, in particular, the ROUTE_ID field 204 of the data frame. The fourth node 308 determines that the ROUTE_ID in the data frame 200 does match the predetermined identifier in the register 130 of the fourth node 304. The data frame 200 is then forwarded to the first processor 116 of the fourth node 308 where the required operation is carried out.

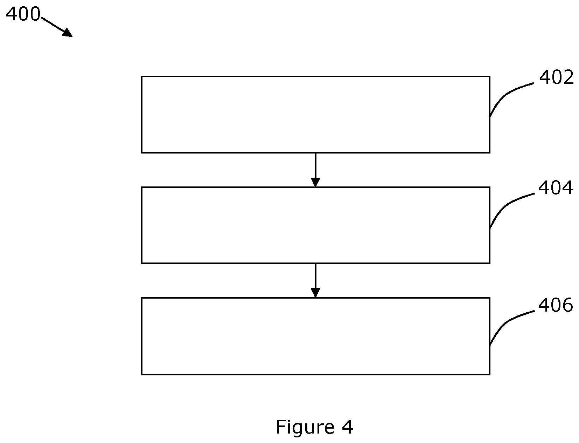

Figure 4 outlines an example method of controlling of operating a communication interface for a first node. The method includes reading 402, by a routing module, a data frame derived from said signalling received via the respective one or more first terminals of one of the first interface module and the second interface module. The method further includes providing 404 for forwarding of at least part of the data frame to either the one or more second terminals for provision to the first processor if an identifier present in a ROUTE_ID field of the data frame matches one or more predetermined identifiers. The method also includes forwarding 406 the data frame to the interface-to-interface connection for retransmission by the other of the first interface module and the second interface module if an identifier present in a ROUTE_ID field of the data frame does not match one or more predetermined identifiers.

The communication interface 106 may also allow for improved local "merging" of devices. This may be achieved by enabling fully shareable memory maps, peripheral accesses and performance. The communication interface may also allow for much more dynamic availability schemes (i.e. chiplets etc.). Also processes may be moved to different parts of a network dynamically to allow for improved resource usage. The system is also easily scalable with only minimal effect on the overall performance of data throughput for larger systems or next generation ECUs where more MCUs are used.

Some examples of larger systems include an MCU-Farm architecture. In such an architecture, there are many MCUs on a single ECU and maybe even on a single chip. These MCUs all need to be interconnected to allow for processes to be carried out. The proposed communication interface enables these MCUs to share the data and share resources such as memory.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A communication interface (102) for a first node (104) comprising:
at least a first interface module (106) and a second interface module (108) wherein,
the first interface module is configured to provide for point-to-point transmission of signalling to a second node (110) and receipt of signalling from the second node via one or more first terminals (112) of the first interface module, the first interface module further comprising one or more second terminals (114) for coupling to a first processor (116) to communicatively couple the first processor and the first interface module; and
the second interface module is configured to provide for point-to-point transmission of signalling to a third node (118) and receipt of signalling from the third node via one or more first terminals (120), the second interface module further comprising one or more second terminals (122) for coupling to the first processor to communicatively couple the first processor and the second interface module; and
at least one hardware, interface-to-interface connection (124) configured to communicatively couple the first interface module and the second interface module;
a routing module configured to read a data frame derived from said signalling received via the respective one or more first terminals of one of the first interface module and the second interface module and, based on whether or not an identifier present in a routing field of the data frame matches one or more predetermined identifiers, provide for forwarding of at least part of the data frame to either the one or more second terminals for provision to the first processor or forward the data frame to the interface-to-interface connection for retransmission by the other of the first interface module and the second interface module **characterized in that**
the routing module comprises a first routing module comprising part of the first interface module and a second routing module comprising part of the second interface module, wherein:
the first routing module (126) is configured to read the data frame derived from said signalling received via the one or more first terminals of the first interface module and, based on whether or not the identifier present in the routing field of the data frame matches one or more predetermined identifiers, forward the data frame to either the one or more second terminals of the first interface module for provision to the first processor or forward the data frame to the interface-to-interface connection for retransmission by the second interface module to the third node; and
the second routing module (128) is configured to read the data frame derived from said signalling received via the one or more first terminals of the second interface module and, based on whether or not the identifier present in the routing field of the data frame matches one or more predetermined identifiers, forward the data frame to either the one or more second terminals of the second interface module for provision to the first processor or forward the data frame to the interface-to-interface connection for retransmission by the first interface module to the second node.

2. The communication interface (102) of any preceding claim, wherein the routing module comprises a register and an interface for programming the register with the one or more predetermined identifiers, wherein the predetermined identifiers allow the routing module to determine if information of the data frame is intended for one or more applications executed by the first processor.

3. The communication interface (102) of any preceding claim, wherein the routing module is configured to:
receive a message from the first processor via the one or more second terminals and,
based on a predetermined rule, populate the routing field of the data frame generated to encapsulate the message and provide for transmission of the data frame as said signalling via the respective one or more first terminals.

4. The communication interface (102) of any preceding claim, wherein the routing module is configured to:
receive a message from the first processor via the one or more second terminals and,
based on information provided by an application executed by the first processor, populate the routing field of the data frame with a specific identifier, the data frame generated to encapsulate the message, and
provide for transmission of the data frame as said signalling via the respective one or more first terminals.

5. The communication interface (102) of any preceding claim, wherein the first processor is configured to execute one or more applications and the one or more applications are configured to send messages to the first interface module (106) and the second interface module (108) using an application-specific channel, wherein the routing module is configured to:
on receipt of one of said messages from the first processor, populate the routing field of the data frame generated to encapsulate the message based on the application-specific channel, and
provide for transmission of the data frame as said signalling via the respective one or more first terminals.

6. The communication interface (102) of any preceding claim, wherein the routing module being configured to forward the data frame to the one or more second terminals for provision to the first processor includes one or more of the first interface module (106), the second interface module (108) and the routing module being configured to remove the identifier present in the routing field.

7. The communication interface (102) of any preceding claim, wherein the first interface module (106) and the second interface module (108) each include an Asynchronous Serial Transmission Interface block for providing said transmission and receipt of the signalling.

8. The communication interface (102) of claim 7, wherein the Asynchronous Serial Transmission Interface block comprise a Low Voltage Differential Signalling Asynchronous Serial Transmission Interface.

9. The communication interface (102) of claim 7 or 8, wherein the first interface module (106) and the second interface module (108) each include a Serial Inter-Processor Interface, SIPI, block coupled with the Asynchronous Serial Transmission Interface block, wherein the SIPI block and Asynchronous Serial Transmission Interface block provide for said transmission and receipt of the signalling.

10. The communication interface (102) of any preceding claim wherein:
the first interface module (106) and the second interface module (108) each include a Serial Inter-Processor Interface, SIPI, block and an Asynchronous Serial Transmission Interface block, wherein the respective Asynchronous Serial Transmission Interface block includes said one or more first terminals to provide for said transmission and receipt of the signalling to the respective second node (110) and third node (118) and wherein the respective SIPI block includes said one or more second terminals for coupling to the first processor; and
wherein the first routing module is configured to provide data frames to and receive data frames from the respective Asynchronous Serial Transmission Interface block and is configured to couple to the first processor via the respective SIPI block; and
wherein the second routing module is configured to provide data frames to and receive data frames from the respective Asynchronous Serial Transmission Interface block and is configured to couple to the first processor via the respective SIPI block.

11. The communication interface (102) of any preceding claim, wherein the routing module is configured to, based on forwarding of the data frame to the interface-to-interface connection for retransmission by the other of the first interface module (106) and the second interface module (108), transmit a message for the first processor to inform it of said forwarding.

12. The communication interface (102) of any preceding claim, wherein the identifier present in the routing field is provided in the data frame in addition to an address field within the data frame.

13. An electronic control unit, ECU, for a vehicle, the ECU including a plurality of the nodes, each node including a communication interface (102) of any preceding claim.

14. A method of operating a communication interface (102) for a first node (104), the communication interface comprising at least a first interface module (106) and a second interface module (108) wherein,
the first interface module is configured to provide for point-to-point transmission of signalling to a second node (110) and receipt of signalling from the second node via one or more first terminals (112), the first interface module further comprising one or more second terminals (114) for coupling to a first processor (116) to communicatively couple the first processor and the first interface module; and
the second interface module is configured to provide for point-to-point transmission of signalling to a third node (118) and receipt of signalling from the third node via one or more first terminals (120), the second interface module further comprising one or more second terminals (122) for coupling to the first processor to communicatively couple the first processor and the second interface module; and at least one hardware, interface-to-interface connection (124) configured to communicatively couple the first interface module and the second interface module;
wherein the method comprises:
reading, by a routing module, a data frame derived from said signalling received via the respective one or more first terminals of one of the first interface module and the second interface module; and
based on whether or not an identifier present in a routing field of the data frame matches one or more predetermined identifiers,
providing for forwarding of at least part of the data frame to either
the one or more second terminals for provision to the first processor or forwarding the data frame to the interface-to-interface connection for retransmission by the other of the first interface module and the second interface module, **characterized in that** the routing module comprises a first routing module (126) comprising part of the first interface module and a second routing module (128) comprising part of the second interface module, wherein:
the first routing module is configured to read the data frame derived from said signalling received via the one or more first terminals of the first interface module and, based on whether or not the identifier present in the routing field of the data frame matches one or more predetermined identifiers, the method comprises forwarding the data frame to either the one or more second terminals of the first interface module for provision to the first processor or forwarding the data frame to the interface-to-interface connection for retransmission by the second interface module to the third node; and
the second routing module is configured to read the data frame derived from said signalling received via the one or more first terminals of the second interface module and, based on whether or not the identifier present in the routing field of the data frame matches one or more predetermined identifiers, the method comprises forwarding the data frame to either the one or more second terminals of the second interface module for provision to the first processor or forwarding the data frame to the interface-to-interface connection for retransmission by the first interface module to the second node.

## Patentansprüche

1. Kommunikationsschnittstelle (102) für einen ersten Knoten (104), umfassend:
mindestens ein erstes Schnittstellenmodul (106) und ein zweites Schnittstellenmodul (108), wobei das erste Schnittstellenmodul dazu ausgelegt ist, Punktzu-Punkt-Übertragung von Signalisierung an einen zweiten Knoten (110) und Empfang von Signalisierung von dem zweiten Knoten über einen oder mehrere erste Anschlüsse (112) des ersten Schnittstellenmoduls bereitzustellen, wobei das erste Schnittstellenmodul ferner einen oder mehrere zweite Anschlüsse (114) zur Kopplung mit einem ersten Prozessor (116) umfasst, um den ersten Prozessor und das erste Schnittstellenmodul kommunikativ zu koppeln; und
das zweite Schnittstellenmodul dazu ausgelegt ist, Punktzu-Punkt-Übertragung von Signalisierung an einen dritten Knoten (118) und Empfang von Signalisierung von dem dritten Knoten über einen oder mehrere erste Anschlüsse (120) bereitzustellen, wobei das zweite Schnittstellenmodul ferner einen oder mehrere zweite Anschlüsse (122) zur Kopplung mit dem ersten Prozessor umfasst, um den ersten Prozessor und das zweite Schnittstellenmodul kommunikativ zu koppeln; und
mindestens eine Hardware-Schnittstelle-zu-Schnittstelle-Verbindung (124), die dazu ausgelegt ist, das erste Schnittstellenmodul und das zweite Schnittstellenmodul kommunikativ zu koppeln;
ein Routing-Modul, das dazu ausgelegt ist, einen Datenrahmen zu lesen, der von der Signalisierung abgeleitet ist, die über den einen oder die mehreren jeweiligen ersten Anschlüsse von einem von dem ersten Schnittstellenmodul und dem zweiten Schnittstellenmodul empfangen wird, und basierend darauf, ob eine in einem Routing-Feld des Datenrahmens vorhandene Kennung mit einer oder mehreren vorbestimmten Kennungen übereinstimmt oder nicht, Weiterleiten mindestens eines Teils des Datenrahmens entweder an den einen oder die mehreren zweiten Anschlüsse zur Bereitstellung an den ersten Prozessor oder Weiterleiten des Datenrahmens an die Schnittstelle-zu-Schnittstelle-Verbindung zur erneuten Übertragung durch das andere von dem ersten Schnittstellenmodul und dem zweiten Schnittstellenmodul zu ermöglichen, **dadurch gekennzeichnet, dass** das Routing-Modul ein erstes Routing-Modul, das einen Teil des ersten Schnittstellenmoduls umfasst, und ein zweites Routing-Modul umfasst, das einen Teil des zweiten Schnittstellenmoduls umfasst, wobei:
das erste Routing-Modul (126) dazu ausgelegt ist, den Datenrahmen zu lesen, der von der Signalisierung abgeleitet ist, die über den einen oder die mehreren ersten Anschlüsse des ersten Schnittstellenmoduls empfangen wird, und basierend darauf, ob die in dem Routing-Feld des Datenrahmens vorhandene Kennung mit einer oder mehreren vorbestimmten Kennungen übereinstimmt oder nicht, den Datenrahmen entweder an den einen oder die mehreren zweiten Anschlüsse des ersten Schnittstellenmoduls zur Bereitstellung an den ersten Prozessor weiterzuleiten oder den Datenrahmen an die Schnittstelle-zu-Schnittstelle-Verbindung zur erneuten Übertragung durch das zweite Schnittstellenmodul an den dritten Knoten weiterzuleiten; und
das zweite Routing-Modul (128) dazu ausgelegt ist, den Datenrahmen zu lesen, der von der Signalisierung abgeleitet ist, die über den einen oder die mehreren ersten Anschlüsse des zweiten Schnittstellenmoduls empfangen wird, und basierend darauf, ob die in dem Routing-Feld des Datenrahmens vorhandene Kennung mit einer oder mehreren vorbestimmten Kennungen übereinstimmt oder nicht, den Datenrahmen entweder an den einen oder die mehreren zweiten Anschlüsse des zweiten Schnittstellenmoduls zur Bereitstellung an den ersten Prozessor weiterzuleiten oder den Datenrahmen an die Schnittstelle-zu-Schnittstelle-Verbindung zur erneuten Übertragung durch das erste Schnittstellenmodul an den zweiten Knoten weiterzuleiten.

2. Kommunikationsschnittstelle (102) nach einem der vorhergehenden Ansprüche, wobei das Routing-Modul ein Register und eine Schnittstelle zum Programmieren des Registers mit der einen oder den mehreren vorbestimmten Kennungen umfasst, wobei die vorbestimmten Kennungen dem Routing-Modul ermöglichen, zu bestimmen, ob Informationen des Datenrahmens für eine oder mehrere Anwendungen bestimmt sind, die von dem ersten Prozessor ausgeführt werden.

3. Kommunikationsschnittstelle (102) nach einem der vorhergehenden Ansprüche, wobei das Routing-Modul zu Folgendem ausgelegt ist:
Empfangen einer Nachricht von dem ersten Prozessor über den einen oder die mehreren zweiten Anschlüsse und basierend auf einer vorbestimmten Regel Füllen des Routing-Feldes des Datenrahmens, der erzeugt wird, um die Nachricht zu verkapseln und die Übertragung des Datenrahmens als die Signalisierung über den einen oder die mehreren jeweiligen ersten Anschlüsse zu ermöglichen.

4. Kommunikationsschnittstelle (102) nach einem der vorhergehenden Ansprüche, wobei das Routing-Modul zu Folgendem ausgelegt ist:
Empfangen einer Nachricht von dem ersten Prozessor über den einen oder die mehreren zweiten Anschlüsse und
basierend auf Informationen, die durch eine Anwendung bereitgestellt werden, die von dem ersten Prozessor ausgeführt wird, Füllen des Routing-Feldes des Datenrahmens mit einer spezifischen Kennung, wobei der Datenrahmen erzeugt wird, um die Nachricht zu verkapseln, und
Ermöglichen der Übertragung des Datenrahmens als die Signalisierung über den einen oder die mehreren jeweiligen ersten Anschlüsse.

5. Kommunikationsschnittstelle (102) nach einem der vorhergehenden Ansprüche, wobei der erste Prozessor dazu ausgelegt ist, eine oder mehrere Anwendungen auszuführen, und die eine oder die mehreren Anwendungen dazu ausgelegt sind, Nachrichten unter Verwendung eines anwendungsspezifischen Kanals an das erste Schnittstellenmodul (106) und das zweite Schnittstellenmodul (108) zu senden, wobei das Routing-Modul zu Folgendem ausgelegt ist:
bei Empfang einer der Nachrichten von dem ersten Prozessor Füllen des Routing-Feldes des Datenrahmens, der erzeugt wird, um die Nachricht zu verkapseln, basierend auf dem anwendungsspezifischen Kanal und
Ermöglichen der Übertragung des Datenrahmens als die Signalisierung über den einen oder die mehreren jeweiligen ersten Anschlüsse.

6. Kommunikationsschnittstelle (102) nach einem der vorhergehenden Ansprüche, wobei das Routing-Modul, das dazu ausgelegt ist, den Datenrahmen an den einen oder die mehreren zweiten Anschlüsse zur Bereitstellung an den ersten Prozessor weiterzuleiten, eines oder mehrere von dem ersten Schnittstellenmodul (106), dem zweiten Schnittstellenmodul (108) und dem Routing-Modul beinhaltet, das dazu ausgelegt ist, die in dem Routing-Feld vorhandene Kennung zu entfernen.

7. Kommunikationsschnittstelle (102) nach einem der vorhergehenden Ansprüche, wobei das erste Schnittstellenmodul (106) und das zweite Schnittstellenmodul (108) jeweils einen Asynchronous Serial Transmission Interface-Block zum Bereitstellen der Übertragung und des Empfangs der Signalisierung beinhalten.

8. Kommunikationsschnittstelle (102) nach Anspruch 7, wobei der Asynchronous Serial Transmission Interface-Block eine Low Voltage Differential Signalling Asynchronous Serial Transmission Interface umfasst.

9. Kommunikationsschnittstelle (102) nach Anspruch 7 oder 8, wobei das erste Schnittstellenmodul (106) und das zweite Schnittstellenmodul (108) jeweils einen Serial Inter-Processor Interface-Block, SIPI-Block, beinhalten, der mit dem Asynchronous Serial Transmission Interface-Block gekoppelt ist, wobei der SIPI-Block und der Asynchronous Serial Transmission Interface-Block die Übertragung und den Empfang der Signalisierung bereitstellen.

10. Kommunikationsschnittstelle (102) nach einem der vorhergehenden Ansprüche, wobei:
das erste Schnittstellenmodul (106) und das zweite Schnittstellenmodul (108) jeweils einen Serial Inter-Processor Interface-Block, SIPI-Block, und einen Asynchronous Serial Transmission Interface-Block beinhalten, wobei der jeweilige Asynchronous Serial Transmission Interface-Block den einen oder die mehreren ersten Anschlüsse zum Ermöglichen der Übertragung und des Empfangs der Signalisierung an den jeweiligen zweiten Knoten (110) und dritten Knoten (118) beinhaltet und wobei der jeweilige SIPI-Block den einen oder die mehreren zweiten Anschlüsse zur Kopplung mit dem ersten Prozessor beinhaltet; und
wobei das erste Routing-Modul dazu ausgelegt ist, Datenrahmen an den jeweiligen Asynchronous Serial Transmission Interface-Block bereitzustellen und von diesem zu empfangen, und dazu ausgelegt ist, über den jeweiligen SIPI-Block mit dem ersten Prozessor gekoppelt zu werden; und
wobei das zweite Routing-Modul dazu ausgelegt ist, Datenrahmen an den jeweiligen Asynchronous Serial Transmission Interface-Block bereitzustellen und von diesem zu empfangen, und dazu ausgelegt ist, über den jeweiligen SIPI-Block mit dem ersten Prozessor gekoppelt zu werden.

11. Kommunikationsschnittstelle (102) nach einem der vorhergehenden Ansprüche, wobei das Routing-Modul dazu ausgelegt ist, basierend auf dem Weiterleiten des Datenrahmens an die Schnittstelle-zu-Schnittstelle-Verbindung zur erneuten Übertragung durch das andere von dem ersten Schnittstellenmodul (106) und dem zweiten Schnittstellenmodul (108) eine Nachricht für den ersten Prozessor zu übertragen, um ihn über die Weiterleitung zu informieren.

12. Kommunikationsschnittstelle (102) nach einem der vorhergehenden Ansprüche, wobei die in dem Routing-Feld vorhandene Kennung in dem Datenrahmen zusätzlich zu einem Adressfeld innerhalb des Datenrahmens bereitgestellt wird.

13. Elektronische Steuereinheit, ECU, für ein Fahrzeug, wobei die ECU eine Mehrzahl der Knoten beinhaltet, wobei jeder Knoten eine Kommunikationsschnittstelle (102) nach einem der vorhergehenden Ansprüche beinhaltet.

14. Verfahren zum Betreiben einer Kommunikationsschnittstelle (102) für einen ersten Knoten (104), wobei die Kommunikationsschnittstelle mindestens ein erstes Schnittstellenmodul (106) und ein zweites Schnittstellenmodul (108) umfasst, wobei das erste Schnittstellenmodul dazu ausgelegt ist, Punktzu-Punkt-Übertragung von Signalisierung an einen zweiten Knoten (110) und Empfang von Signalisierung von dem zweiten Knoten über einen oder mehrere erste Anschlüsse (112) bereitzustellen, wobei das erste Schnittstellenmodul ferner einen oder mehrere zweite Anschlüsse (114) zur Kopplung mit einem ersten Prozessor (116) umfasst, um den ersten Prozessor und das erste Schnittstellenmodul kommunikativ zu koppeln; und
das zweite Schnittstellenmodul dazu ausgelegt ist, Punktzu-Punkt-Übertragung von Signalisierung an einen dritten Knoten (118) und Empfang von Signalisierung von dem dritten Knoten über einen oder mehrere erste Anschlüsse (120) bereitzustellen, wobei das zweite Schnittstellenmodul ferner einen oder mehrere zweite Anschlüsse (122) zur Kopplung mit dem ersten Prozessor umfasst, um den ersten Prozessor und das zweite Schnittstellenmodul kommunikativ zu koppeln; und mindestens eine Hardware-Schnittstelle-zu-Schnittstelle-Verbindung (124), die dazu ausgelegt ist, das erste Schnittstellenmodul und das zweite Schnittstellenmodul kommunikativ zu koppeln;
wobei das Verfahren Folgendes umfasst:
Lesen eines Datenrahmens, der von der Signalisierung abgeleitet ist, die über den einen oder die mehreren jeweiligen ersten Anschlüsse des ersten Schnittstellenmoduls oder des zweiten Schnittstellenmoduls empfangen wird, durch ein Routing-Modul; und
basierend darauf, ob eine in einem Routing-Feld des Datenrahmens vorhandene Kennung mit einer oder mehreren vorbestimmten Kennungen übereinstimmt oder nicht, Ermöglichen des Weiterleitens mindestens eines Teils des Datenrahmens entweder an den einen oder die mehreren zweiten Anschlüsse zur Bereitstellung an den ersten Prozessor oder Weiterleitens des Datenrahmens an die Schnittstelle-zu-Schnittstelle-Verbindung zur erneuten Übertragung durch das andere von dem ersten Schnittstellenmodul und dem zweiten Schnittstellenmodul, **dadurch gekennzeichnet, dass** das Routing-Modul ein erstes Routing-Modul (126), das einen Teil des ersten Schnittstellenmoduls umfasst, und ein zweites Routing-Modul (128) umfasst, das einen Teil des zweiten Schnittstellenmoduls umfasst, wobei:
das erste Routing-Modul dazu ausgelegt ist, den Datenrahmen zu lesen, der von der Signalisierung abgeleitet ist, die über den einen oder die mehreren ersten Anschlüsse des ersten Schnittstellenmoduls empfangen wird, und das Verfahren basierend darauf, ob die in dem Routing-Feld des Datenrahmens vorhandene Kennung mit einer oder mehreren vorbestimmten Kennungen übereinstimmt oder nicht, Weiterleiten des Datenrahmens entweder an den einen oder die mehreren zweiten Anschlüsse des ersten Schnittstellenmoduls zur Bereitstellung an den ersten Prozessor oder Weiterleiten des Datenrahmens an die Schnittstelle-zu-Schnittstelle-Verbindung zur erneuten Übertragung durch das zweite Schnittstellenmodul an den dritten Knoten umfasst; und das zweite Routing-Modul dazu ausgelegt ist, den Datenrahmen zu lesen, der von der Signalisierung abgeleitet ist, die über den einen oder die mehreren ersten Anschlüsse des zweiten Schnittstellenmoduls empfangen wird, und das Verfahren basierend darauf, ob die in dem Routing-Feld des Datenrahmens vorhandene Kennung mit einer oder mehreren vorbestimmten Kennungen übereinstimmt oder nicht, Weiterleiten des Datenrahmens entweder an den einen oder die mehreren zweiten Anschlüsse des zweiten Schnittstellenmoduls zur Bereitstellung an den ersten Prozessor oder Weiterleiten des Datenrahmens an die Schnittstelle-zu-Schnittstelle-Verbindung zur erneuten Übertragung durch das erste Schnittstellenmodul an den zweiten Knoten umfasst.

## Revendications

1. Interface de communication (102) d'un premier nœud (104) comprenant :
au moins un premier module d'interface (106) et un second module d'interface (108) dans lesquels,
le premier module d'interface est configuré pour assurer la transmission point à point de signalisation vers un deuxième nœud (110) et la réception de signalisation à partir du deuxième nœud via un ou plusieurs premiers terminaux (112) du premier module d'interface, le premier module d'interface comprenant en outre un ou plusieurs seconds terminaux (114) destinés à se coupler à un premier processeur (116) afin de coupler de manière communicative le premier processeur et le premier module d'interface ; et
le second module d'interface est configuré pour assurer la transmission point à point de signalisation vers un troisième nœud (118) et la réception de signalisation à partir du troisième nœud via un ou plusieurs premiers terminaux (120), le second module d'interface comprenant en outre un ou plusieurs seconds terminaux (122) destinés à se coupler au premier processeur afin de coupler de manière communicative le premier processeur et le second module d'interface ; et
au moins une connexion matérielle interface-interface (124) configurée pour coupler de manière communicative le premier module d'interface et le second module d'interface ;
un module de routage configuré pour lire une trame de données dérivée de ladite signalisation reçue via le ou les premiers terminaux respectifs d'un du premier module d'interface et du second module d'interface et, selon si un identifiant présent dans un champ de routage de la trame de données est conforme ou non à un ou plusieurs identifiants prédéterminés, assurer la transmission d'au moins une partie de la trame de données, soit vers le ou les seconds terminaux pour assurer la fourniture vers le premier processeur, soit transmettre la trame de données vers la connexion interface-interface pour une retransmission par l'autre du premier module d'interface et du second module d'interface **caractérisé en ce que** le module de routage comprend un premier module de routage comprenant une partie du premier module d'interface et un second module de routage comprenant une partie du second module d'interface, dans laquelle :
le premier module de routage (126) est configuré pour lire la trame de données dérivée de ladite signalisation reçue via le ou les premiers terminaux du premier module d'interface et, selon si l'identifiant présent dans le champ de routage de la trame de données est conforme ou non à un ou plusieurs identifiants prédéterminés, transmettre la trame de données soit vers le ou les seconds terminaux du premier module d'interface pour assurer la fourniture vers le premier processeur, soit transmettre la trame de données vers la connexion interface-interface pour la retransmission par le second module d'interface vers le troisième nœud ; et
le second module de routage (128) est configuré pour lire la trame de données dérivée de ladite signalisation reçue via le ou les premiers terminaux du second module d'interface et, selon si l'identifiant présent dans le champ de routage de la trame de données est conforme ou non à un ou plusieurs identifiants prédéterminés, transmettre la trame de données soit vers l'un ou les seconds terminaux du second module d'interface pour assurer la fourniture au premier processeur, soit transmettre la trame de données vers la connexion interface-interface pour la retransmission par le premier module d'interface vers le deuxième nœud.

2. Interface de communication (102) selon l'une quelconque des revendications précédentes, dans laquelle le module de routage comprend un registre et une interface pour programmer le registre avec le ou les identifiants prédéterminés, dans laquelle les identifiants prédéterminés permettent au module de routage de déterminer si des informations de la trame de données sont destinées à une ou plusieurs applications exécutées par le premier processeur.

3. Interface de communication (102) selon l'une quelconque des revendications précédentes, dans laquelle le module de routage est configuré pour :
recevoir un message du premier processeur via le ou les seconds terminaux et,
sur la base d'une règle prédéterminée, remplir le champ de routage de la trame de données générée pour encapsuler le message et assurer la transmission de la trame de données en tant que ladite signalisation via le ou les premiers terminaux respectifs.

4. Interface de communication (102) selon l'une quelconque des revendications précédentes, dans laquelle le module de routage est configuré pour :
recevoir un message du premier processeur via le ou les seconds terminaux et,
sur la base d'informations fournies par une application exécutée par le premier processeur, remplir le champ de routage de la trame de données avec un identifiant spécifique, la trame de données étant générée pour encapsuler le message, et
assurer la transmission de la trame de données en tant que ladite signalisation via le ou les premiers terminaux respectifs.

5. Interface de communication (102) selon l'une quelconque des revendications précédentes, dans laquelle le premier processeur est configuré pour exécuter une ou plusieurs applications et la ou les applications sont configurées pour envoyer des messages au premier module d'interface (106) et au second module d'interface (108) en utilisant un canal spécifique à l'application, le module de routage étant configuré pour :
à la réception d'un desdits messages en provenance du premier processeur, remplir le champ de routage de la trame de données généré pour encapsuler le message sur la base du canal spécifique à l'application, et assurer la transmission de la trame de données en tant que ladite signalisation via le ou les premiers terminaux respectifs.

6. Interface de communication (102) selon l'une quelconque des revendications précédentes, dans laquelle le module de routage étant configuré pour transmettre la trame de données vers le ou les seconds terminaux pour assurer la fourniture vers le premier processeur comprend un ou plusieurs parmi le premier module d'interface (106), le second module d'interface (108) et le module de routage étant configurés pour retirer l'identifiant présent dans le champ de routage.

7. Interface de communication (102) selon l'une quelconque des revendications précédentes, dans laquelle le premier module d'interface (106) et le second module d'interface (108) comprennent chacun un bloc d'interface de transmission en série asynchrone pour assurer lesdites transmission et réception de la signalisation.

8. Interface de communication (102) selon la revendication 7, dans laquelle le bloc d'interface de transmission en série asynchrone comprend une interface de transmission en série asynchrone de signalisation différentielle basse tension.

9. Interface de communication (102) selon la revendication 7 ou 8, dans laquelle le premier module d'interface (106) et le second module d'interface (108) comprennent chacun un bloc d'interface inter-processeur en série, SIPI, couplé au bloc d'interface de transmission en série asynchrone, dans laquelle le bloc SIPI et le bloc d'interface de transmission en série asynchrone assurent lesdites transmission et réception de la signalisation.

10. Interface de communication (102) selon l'une quelconque des revendications précédentes, dans laquelle :
le premier module d'interface (106) et le second module d'interface (108) comprennent chacun un bloc d'interface inter-processeur en série, SIPI, et un bloc d'interface de transmission en série asynchrone, dans laquelle le bloc d'interface de transmission en série asynchrone respectif comprend lesdits un ou plusieurs premiers terminaux pour assurer lesdites transmission et réception de la signalisation aux deuxième (110) et troisième (118) nœuds respectifs et dans laquelle le bloc SIPI respectif comprend lesdits un ou plusieurs seconds terminaux pour le couplage au premier processeur ; et
dans laquelle le premier module de routage est configuré pour fournir des trames de données au bloc d'interface de transmission en série asynchrone respectif, et recevoir des trames de données à partir de celui-ci, et est configuré pour se coupler au premier processeur via le bloc SIPI respectif ; et
dans laquelle le second module de routage est configuré pour fournir des trames de données au bloc d'interface de transmission en série asynchrone respectif, et recevoir des trames de données à partir de celui-ci, et est configuré pour se coupler au premier processeur via le bloc SIPI respectif.

11. Interface de communication (102) selon l'une quelconque des revendications précédentes, dans laquelle le module de routage est configuré pour, sur la base de la transmission de la trame de données à la connexion interface-interface pour une retransmission par l'autre du premier module d'interface (106) et du second module d'interface (108), transmettre un message pour le premier processeur afin de l'informer de ladite transmission.

12. Interface de communication (102) selon l'une quelconque des revendications précédentes, dans laquelle l'identifiant présent dans le champ de routage est fourni dans la trame de données en plus d'un champ d'adresse à l'intérieur de la trame de données.

13. Unité de commande électronique, ECU, pour un véhicule, l'ECU comprenant une pluralité de nœuds, chaque nœud comprenant une interface de communication (102) selon l'une quelconque des revendications précédentes.

14. Procédé de fonctionnement d'une interface de communication (102) pour un premier nœud (104), l'interface de communication comprenant au moins un premier module d'interface (106) et un second module d'interface (108) dans lequel,
le premier module d'interface est configuré pour assurer la transmission point à point de la signalisation vers un deuxième nœud (110) et la réception de la signalisation à partir du deuxième nœud via un ou plusieurs premiers terminaux (112), le premier module d'interface comprenant en outre un ou plusieurs seconds terminaux (114) destinés à se coupler à un premier processeur (116) afin de coupler de manière communicative le premier processeur et le premier module d'interface ; et
le second module d'interface est configuré pour assurer la transmission point à point de signalisation vers un troisième nœud (118) et la réception de signalisation à partir du troisième nœud via un ou plusieurs premiers terminaux (120), le second module d'interface comprenant en outre un ou plusieurs seconds terminaux (122) destinés à se coupler au premier processeur afin de coupler de manière communicative le premier processeur et le second module d'interface ; et
au moins une connexion matérielle interface-interface (124) configurée pour coupler de manière communicative le premier module d'interface et le second module d'interface ;
dans lequel le procédé comprend :
la lecture, par un module de routage, d'une trame de données dérivée de ladite signalisation reçue via le ou les premiers terminaux respectifs d'un du premier module d'interface et du second module d'interface ; et
selon si un identifiant présent dans un champ de routage de la trame de données est conforme ou non à un ou plusieurs identifiants prédéterminés,
assurer la transmission d'au moins une partie de la trame de données soit vers le ou les seconds terminaux pour assurer la fourniture vers le premier processeur, soit la transmission de la trame de données vers la connexion interface-interface pour une retransmission par l'autre du premier module d'interface et du second module d'interface, **caractérisé en ce que** le module de routage comprend un premier module de routage (126) comprenant une partie du premier module d'interface et un second module de routage (128) comprenant une partie du second module d'interface, dans lequel :
le premier module de routage est configuré pour lire la trame de données dérivée de ladite signalisation reçue via le ou les premiers terminaux du premier module d'interface et, selon si l'identifiant présent dans le champ de routage de la trame de données est conforme ou non à un ou plusieurs identifiants prédéterminés, le procédé comprend la transmission de la trame de données soit à l'un ou aux seconds terminaux du premier module d'interface pour assurer la fourniture vers le premier processeur, soit la transmission de la trame de données vers la connexion interface-interface pour la retransmission par le second module d'interface vers le troisième nœud ; et
le second module de routage est configuré pour lire la trame de données dérivée de ladite signalisation reçue via le ou les premiers terminaux du second module d'interface et, selon si l'identifiant présent dans le champ de routage de la trame de données est conforme ou non à un ou plusieurs identifiants prédéterminés, le procédé comprend la transmission de la trame de données soit vers le ou les seconds terminaux du second module d'interface pour assurer la fourniture au premier processeur, soit la transmission de la trame de données vers la connexion interface-interface pour la retransmission par le premier module d'interface vers le deuxième nœud.
